# EUROPEAN PATENT SPECIFICATION

(11) **EP 0 440 403 B1**
(45) Date of publication and mention of the grant of the patent: **29.12.1993**
(21) Application number: 91300640.9
(22) Date of filing: 28.01.1991
(51) Int. Cl.: B62D 1/18

(54) **An adjustable steering column mechanism**
Verstellbare Lenksäulen-Vorrichtung
Mécanisme de colonne de direction ajustable

(30) Priority: 27.01.1990 GB 9001907
(43) Date of publication of application: 07.08.1991
(73) Proprietor: FORD MOTOR COMPANY LIMITED, Brentwood, Essex CM13 3BW (GB); FORD MOTOR COMPANY, Dearborn, MI 48120 (US); FORD FRANCE S. A., 92506 Rueil-Malmaison Cédex (FR); FORD-WERKE AKTIENGESELLSCHAFT, 50725 Köln (DE)
(72) Inventor: Baskett, William Carl, Great Totham, Maldon, Essex CM9 8DE (GB)
(74) Representative: Messulam, Alec Moses

(56) References cited:
- EP-A- 0 341 078
- DE-A- 2 558 985
- DE-A- 3 205 416
- GB-A- 2 191 273
- US-A- 3 977 692
- PATENT ABSTRACTS OF JAPAN vol. 1, no. 154 (M-051) 9 December 1977,& JP-A-52 099521 (AISHIN SEIKI) 20 August 1977,

## Description

This invention relates to an adjustable steering column mechanism which can provide height adjustment of the steering wheel in a motor vehicle.

British Patent Specification 2 191 273 shows a mechanism by means of which a steering column can be adjusted for height and tilt. In this mechanism, mating toothed plates are used which can be engaged with one another in a variety of different positions. The toothed engagement provides a positive lock between the two components. The construction shown in this specification does not however allow a smooth adjusting action because when the mechanism is released, the mating plates are not separated.

DE-A-32 05 416, which corresponds to the preamble of claim 1, discloses a steering column height adjustment mechanism in which opposing toothed members are provided on the vehicle body and on the steering column. A release lever is normally held in a position in which it positively holds the toothed members in engagement, to lock the column height. The release lever can however be moved to a position where it allows the toothed members to be moved out of engagement, under the influence of a helical spring mounted between the members.

In accordance with the present invention there is provided an adjustable steering column mechanism for use, in a motor vehicle, the mechanism having a first part connected to the vehicle bodywork and a second part connected to the column, with the two parts each having a set of co-operating teeth which can engage with one another in a series of different relative positions to secure the column at different positions relative to the bodywork, wherein the teeth on the second part are provided on a clamp plate which is movable into and out of engagement with the teeth on the first part, the movement into engagement being produced by an externally applied force and the movement out of engagement being provided by a biasing force characterised in that the biasing force is produced by an integral part of the clamp plate.

The clamp plate is preferably a plastics moulding, and the biasing force is produced by integrally moulded resilient wings on the clamp plate which press against a part of the mechanism which does not move when the teeth move into or out of engagement with one another.

In a preferred embodiment, the clamp plate has a stem extending in the direction away from the toothed face of the plate, and the resilient wings are positioned at the end of the stem remote from the toothed face. The mechanism includes a holder in which the stem of the clamp plate is supported for movement into and out of engagement with the first part.

The resilient wings preferably extend laterally from an end face of the stem to provide a smooth surface on which the externally applied force can act.

The externally applied force can be exerted by a pivoted cam, and the cam can be mounted at the end of a lever arm. By turning the lever arm in one direction, the cam forces the clamp plate against the teeth on the first part, and by moving the lever the other way the cam releases the clamp plate so that the resilient wings lift the clamp plate away from the first part.

The mechanism may be incorporated in a steering column construction as described in our European Patent Application No 89304558.3, and the disclosure of that specification is incorporated herein by this reference. In particular, the lever may be pivoted on a pivot pin, the head of which forms part of a mechanism which allows adjustment of the reach on the steering column.

The invention will now be further described, by way of example, with reference to the accompanying drawing in which:
Figure 1 is an exploded view of a steering column mechanism in accordance with the invention;
Figure 2 shows the assembled mechanism in the locked position; and
Figure 3 corresponds to Figure 2 but shows the mechanism in the "free" position.

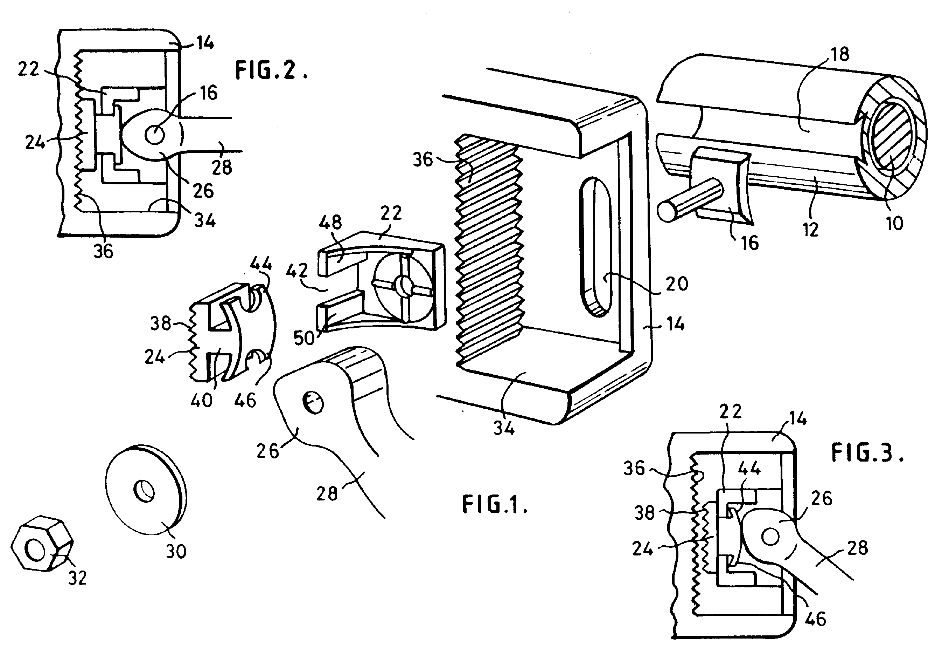

In Figure 1, a steering shaft 10 is carried within a column 12. The column is supported, close to the top end of the column where the steering wheel is mounted, on a bracket 14 which forms part of the fixed structure of a motor vehicle. These parts are connected by means of a T-bolt 16 the head of which is shaped so that it will slide in a dovetail slot 18 in the side of the column 12. The shank of the bolt 16 then passes through an elongate hole 20 in the fixed member 14. A support plate 22 carrying a clamp plate 24 is supported on the bolt, and then the cam-shaped head 26 of a lever 28 is fitted on the bolt followed by a washer 30 and a nut 32.

More details of the connection between the steering column 12 and the fixed part 14 will be apparent from the specification of European Patent Application 89304558.3.

The support plate 22, clamp plate 24 and cam 26 are housed in a recess 34 formed in the fixed part 14. On one wall of this recess is a set of parallel teeth 36. The clamp plate 24 also has a face which carries a set of teeth 38 which correspond in size and spacing to the teeth 36. The clamp plate 24 also has a stem 40 which is received in a slot 42 in the support plate, and resilient wings 44,46 which bear against shoulders 48,50 on the support plate.

The manner in which this mechanism operates will become apparent from Figures 2 and 3. In Figure 2, the lever 28 has been turned to a position where a lobe of the cam head 26 presses on the clamp plate 24, overcomes the spring force exerted by the resilient wings 44 and 46 and presses the teeth 38 against the teeth 36. In this position, the steering column is locked and the bolt 16 cannot move along the elongate slot 20.

However when the lever 28 is moved through an angle of about 60° to the position of Figure 3, then the lobe of the cam is lifted off the clamp plate and the resilient wings 44 and 46 act against the shoulders 48,50 and lift the clamp plate 24 away from the teeth 36. In this position the two sets of teeth 36,38 are withdrawn from each other and the steering column can be moved (by grasping the steering column and lifting or lowering) to alter the height of the steering wheel. When this happens the bolt 16 slides up and down in the slot 20 until the desired position is reached where upon the lever 28 is once more turned to produce the clamping action shown in Figure 2.

The clamp plate 24 is preferably a plastics moulding, with the resilience of the wings 44,46 being an inherent property of the material and shape chosen.

The mechanism described here can be combined with the mechanism which allows the reach of the steering column to be adjusted, with the lever 28 being able to release and lock the reach adjustment at the same time as it releases and locks the height adjustment as just described.

## Claims

1. An adjustable steering column mechanism for use in a motor vehicle, the mechanism having a first part connected to the vehicle bodywork and a second part connected to the column (10), with the two parts each having a set of cooperating teeth (36,38) which can engage with one another in a series of different relative positions to secure the column (10) at different positions relative to the bodywork, the teeth (38) on the second part being provided on a clamp plate (24) which is movable into and out of engagement with the teeth (36) on the first part (14), the movement into engagement being produced by an externally applied force and the movement out of engagement being provided by a biasing force, characterised in that the biasing force is produced by an integral part (44,46) of the clamp plate (24).

2. An adjustable steering column mechanism as claimed in Claim 1, characterised in that the clamp plate (24) is a plastics moulding, and the biasing force is produced by integrally moulded resilient wings (44,46) on the clamp plate (24) which press against a part of the mechanism which does not move when the teeth move into or out of engagement with one another.

3. An adjustable steering column mechanism as claimed in Claim 2, characterised in that the clamp plate (24) has a stem (40) extending in the direction away from the toothed face (38) of the plate, and the resilient wings (44,46) are positioned at the end of the stem (40) remote from the toothed face (38).

4. An adjustable steering column mechanism as claimed in any preceding claim, including a holder (22) in which the stem (40) of the clamp plate (24) is supported for movement into and out of engagement with the first part.

5. An adjustable steering column mechanism as claimed in Claim 2 or any claims appended thereto, wherein the resilient wings (44,46) extend laterally from an end face of the stem (40) to provide a smooth surface on which the externally applied force can act.

6. An adjustable steering column mechanism as claimed in any preceding claim, wherein the externally applied force is exerted by a pivoted cam (26), and the cam (26) is mounted at the end of a lever arm (28).

7. An adjustable steering column mechanism as claimed in Claim 6, wherein the lever arm (28) is pivoted on a pivot pin, the head (16) of which forms part of a mechanism which allows adjustment of the reach on the steering column.

## Patentansprüche

1. Verstellbarer Lenksäulenmechanismus zur Verwendung in einem Kraftfahrzeug, wobei der Mechanismus ein erstes Teil, das mit dem Fahrzeugaufbau verbunden ist und ein zweites Teil, das mit der Saule (10) verbunden ist, aufweist, wobei die beiden Teile jeweils einen Satz zusammenwirkender Zähne (36,38) haben, die ineinander in einer Reihe unterschiedlicher, relativer Stellungen eingreifen konnen, um die Säule (10) in verschiedenen Stellungen in bezug zur Karosserie zu sichern, wobei die Zähne (38) auf dem zweiten Teil auf einer Spannplatte (24) vorgesehen sind, welche in und aus dem Eingriff mit den Zähnen (36) auf dem ersten Teil (14) bewegt werden kann, wobei die Bewegung in den Eingriff durch eine von außen aufgebrachte Kraft erzeugt wird, und die Bewegung aus dem Eingriff heraus von einer Vorspannungskraft geschaffen wird, dadurch gekennzeicnnet , daß die Vorspannungskraft von einem integrierenden Bestandteil (44,46) der Spannplatte (24) erzeugt wird.

2. Verstellbarer Lenksäulenmechanismus nach Anspruch 1, dadurch gekennzeichnet, daß die Spannplatte (24) aus einem Kunststoff-Formteil besteht, und daß die Vorspannungskraft von integral geformten elastischen Flügeln (44,46) auf der Spannplatte (24) erzeugt wird, die gegen einen Teil des Mechanismus drücken, der sich nicht bewegt, wenn die Zähne sich in den oder aus dem Eingriff miteinander bewegen.

3. Verstellbarer Lenksäulenmecnanismus nacn Anspruch 2, dadurch gekennzeichnet, daß die Spannplatte (24) einen Stiel (40) beinhaltet, der sich in der Richtung weg von der gezahnten Seite (38) der Platte erstreckt, und daß die elastischen Flügel (44,46) am Ende des Stieles angebracht sind, von der gezahnten Seite (38) entfernt.

4. Verstellbarer Lenksäulenmechanismus nach einem der vorstehenden Ansprüche, der einen Halter (22) beinhaltet, in welchem der Stiel (40) der Spannplatte (24) für die Bewegung in den und aus dem Eingriff mit dem ersten Teil gelagert ist.

5. Verstellbarer Lenksaulenmechanismus nach Anspruch 2 oder einem der damit verbundenen Ansprüche, wobei sich die elastischen Flügel (44,46) seitlich von einer Kopfseite des Stieles (40) erstrecken, um eine weiche Oberfläche zu schaffen, auf welcher die von außen aufgebrachte Kraft wirken kann.

6. Verstellbarer Lenksäulenmechanismus nach einem der vorstehenden Ansprüche, wobei die von außen aufgebrachte Kraft von einem drehbaren Nocke (26) ausgeubt wird, und die Nocke (26) am Ende eines Hebelarmes (28) befestigt ist.

7. Verstellbarer Lenksäulenmechanismus nach Anspruch 6, wobei der Hebelarm (28) auf einem Gelenkzapfen gedreht wird, dessen Kopf (16) einen Teil des Mechanismus bildet, der eine Verstellung der Reichweite an der Lenksäule erlaubt.

## Revendications

1. Mécanisme de colonne de direction réglable à utiliser dans un véhicule à moteur, le mécanisme présentant une première partie reliée à la carrosserie du véhicule et une seconde partie reliée à la colonne (10), les deux parties présentant chacune un jeu de dents qui coopèrent (36, 38) pouvant s'engrener les unes avec les autres en une série de différentes positions relatives de façon à fixer la colonne (10) en des positions différentes par rapport à la carrosserie, les dents (38) sur la seconde partie étant réalisées sur une plaque de serrage qui peut être engrenée avec les dents (36) ou désengrenée d'avec celles-ci sur la première partie (14), le mouvement permettant l'engrenage étant produit par une force appliquée extérieurement et le mouvement permettant le désengrenage étant produit par une force de charge, caractérisé en ce que la force de charge est produite par une partie (44, 46) faisant partie intégrante de la plaque de serrage (24).

2. Mécanisme de colonne de direction réglable selon la revendication 1, caractérisé en ce que la plaque de serrage (24) est un moulage en matière plastique et la force de charge est produite par des ailes résilientes intégralement moulées (44, 46) sur la plaque de serrage (24) qui appuient sur une partie du mécanisme qui ne bouge pas lorsque les dents s'engrènent entre elles ou se désengrènent.

3. Mécanisme de colonne de direction réglable selon la revendication 2, caractérisé en ce que la plaque de serrage (24) présente une tige (40) s'étendant dans la direction opposée à la facée dentée (38) de la plaquc, et Ics ailes résilientes (44, 46) sont placées à l'extrémité de la tige (40) éloignée de la face dentée (38).

4. Mécanisme de colonne de direction réglable selon l'une des revendications précédentes, incluant un support (22) dans lequel la tige (40) de la plaque de serrage (24) est supportée pour permettre l'engrenage avec la première partie ou le désengrenage d'avec celle-ci.

5. Mécanisme de colonne de direction réglable selon la revendication 2 ou l'une des revendications précédentes, dans lequel les ailes résilientes (44, 46) s'étendent latéralement depuis une extrémité finale de la tige (40) afin de fournir une surface lisse sur laquelle peut agir la force apliquée extérieurement.

6. Mécanisme de colonne de direction réglable selon l'une des revendications précédentes, dans lequel la force appliquée extérieurement est exercée par une came pivotante (26), et la came (26) est montée à l'extrémité du levier de vérin (28).

7. Mécanisme de colonne de direction réglable selon la revendication 6, dans lequel le levier de vérin (28) pivote sur un pivot dont la tête (16) fait partie du mécanisme qui permet le réglage de la portée sur la colonne de direction.
